# EUROPEAN PATENT APPLICATION

(11) **EP 1 624 239 A1**
(43) Date of publication of application: **08.02.2006**
(21) Application number: 05076723.5
(22) Date of filing: 27.07.2005
(51) Int. Cl.: F16L 3/24, F16B 37/04

(54) **Fixing assembly**

(30) Priority: 06.08.2004 NL 1026797
(71) Applicant: J. van Walraven Holding B.V., 3641 RK Mijdrecht (NL)
(72) Inventor: Van Walraven, Jan, 3641 GP Mijdrecht (NL)
(74) Representative: Houben, Christiaan Hein Willem Frans

(57) **Abstract**

The invention relates to a fixing assembly (1) for fixing an object (5), in particular a pipe clamp (5) provided with two bores (54) for receiving a threaded bolt (7), on a profiled element (4) with flanges bounding a longitudinal slot (45). The fixing assembly (1) comprises an elongated metal nut (2) which can be inserted through the longitudinal slot (45) into the profiled element (4) with its longitudinal axis in line with the longitudinal slot (45) and can be turned to a transverse position so that it grips behind the flanges of the profiled element (4). The nut (2) further has a through-running bore (23) for receiving a male fixing element (6) for fixing the object on the profiled element (4) when the nut (2) is in its transverse position. The fixing assembly (1) further comprises a fixing element (3) comprising a plate-shaped (32) body with a central opening (37) which is substantially coaxial with the bore (23) in the nut (2) through which a male fixing element (6) is to be inserted. The plate-shaped body (32) has on the side facing the nut (2) an engagement surface for engaging on the top surface of the profiled element (4). The fixing element (3) is further provided with flanges (34) which are connected to the plate (32). The flanges (34) are provided with a fitting surface (35) against which the object (5) to be fixed can be fitted. The flanges (34) are provided with openings (36) for receiving the fixing means (7), in particular bolts (7) or the like, in order to connect the object (5) to the fixing element (4).

## Description

The invention relates to a fixing assembly for fixing an object on a profiled element with a longitudinal slot, in particular a profiled element of the type which has two sides extending in the longitudinal direction, a bottom which connects the sides, and a top surface, which top surface is formed by a flange directed inwards from each side, which flanges bound a longitudinal slot between them. The fixing assembly comprises an elongated metal nut with a top surface and a bottom surface situated opposite said top surface, which nut is of a length that is greater than the width of the longitudinal slot of the profiled element and of such a width that the nut can be inserted through the longitudinal slot into the profiled element with its longitudinal axis in line with the longitudinal slot in the profiled element, and can then be turned so that it extends substantially transversely to the longitudinal slot and with its top surface engages behind the flanges of the profiled element, the nut further having a bore extending through it which is preferably threaded, for receiving a male fixing element for fixing the object to the profiled element when the nut is in its transverse position.

Such fixing assemblies are known, for example for fixing pipe clamps. In this case a male fixing element, in particular a threaded rod, is placed with one end in the bore of the nut, after which the nut is inserted into the profiled element and turned to the transverse position. The elongated nut is then secured in the profiled element by means of a second nut, which is placed on the threaded rod. A washer is generally placed underneath the second nut, which washer in the fitted state engages on the top surface of the flanges of the profiled element. The pipe clamp is provided with a female fixing member in which the other end of the threaded rod can be accommodated.

Constructions are also known in which the pipe clamp comprises a foot part with a hole through which a bolt can be inserted, by means of which bolt the pipe clamp is fixed to the profiled element with the aid of the elongated nut.

Pipe clamps provided with two parallel bores through which bolts or the like can be inserted are also known. These pipe clamps often comprise two clamp halves, which are each provided with bores extending through them for bolts to be passed through, by means of which bolts the clamp halves can be clamped on top of each other. Such pipe clamps are often used in practice for fixing hydraulic pipes or the like. The pipe clamp is then often fixed directly on a steel machine part in which threaded bores are provided at intervals corresponding to those of the bores in the clamp halves. The bolts are then screwed into those threaded bores. The clamp halves are clamped firmly on top of each other by tightening the bolts.

For the fixing of such a pipe clamp on a profiled element of the type described above, two elongated nuts into which the bolts could be screwed would be necessary. This results in a difficult and time-consuming fitting operation because the elongated nuts have to be fitted accurately at the correct intervals in the profiled element, so that their bores lie coaxially with the bores in the pipe clamp in order that the bolts can be inserted through them. Furthermore, it is not possible to fit the pipe clamp turned in another direction, for example transversely to the longitudinal direction of the profiled element, which limits the flexibility of the pipe clamp in use.

The object of the invention is to provide a fixing assembly for objects with two bores, such as the pipe clamp described.

This object is achieved by a fixing assembly according to claim 1.

The fixing assembly according to the invention comprises a fixing element comprising a plate-shaped body with a central opening which is substantially coaxial with the bore in the elongated nut, through which opening a male fixing element is to be inserted. The plate-shaped body has on the side facing the elongated nut an engagement surface for engaging on the top surface of the profiled element. The fixing element is further provided with flanges which are connected to the plate. The flanges are provided with a fitting surface against which the object to be fixed can be fitted. The flanges are also provided with openings for receiving fixing means, such as, for example, bolts or the like, in order to connect the object to the fixing element.

The fixing element can be used in combination with the pipe clamp with two bores as described earlier. This will be explained in greater detail later in the description with reference to the drawing.

Another aspect of the invention is that the fixing element has at least one locking lip extending from the edge of the engagement surface in the direction of the nut, the plate-shaped body with the locking lip being shaped and dimensioned in such a way that the fixing element can be fitted in two positions on the profiled element, in a first fitted position of the plate-shaped body relative to the profiled element the locking lip gripping over the edge of the profiled element formed between the top surface and the side, and in a second fitted position, crosswise to the first fitted position, the locking lip extending between the flanges in the longitudinal slot of the profiled element.

In the fitted state in a first position the locking lip provides a lock to prevent the plate-shaped body from rotating during the tightening of the connection, by the fact that the lip is retained between the side and the flange of the profiled element. In a second position the locking lip is retained by the inside edges of the flanges of the profiled element.

It is advantageous that objects such as, for example, the abovementioned pipe clamp can be fixed in two positions on the profiled element.

The invention will be explained in greater detail in the description below on the basis of a preferred embodiment of the invention with reference to the drawing, in which:
Fig. 1 shows a view in perspective with disassembled parts of a preferred embodiment of a fixing assembly for a pipe clamp,
Fig. 2 shows a view in perspective of the fixing assembly of Fig. 1 in a first fitted state, and
Fig. 3 shows a view in perspective of the fixing assembly of Fig. 1 in a second fitted state.

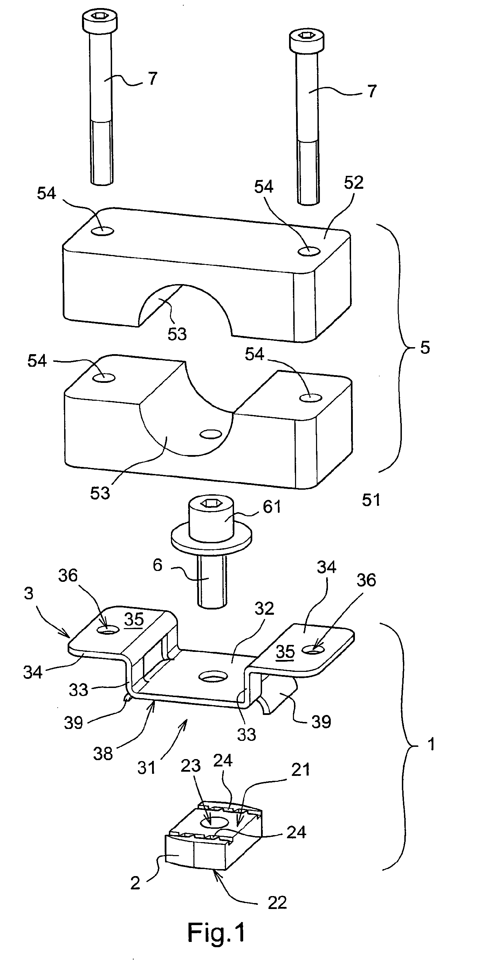

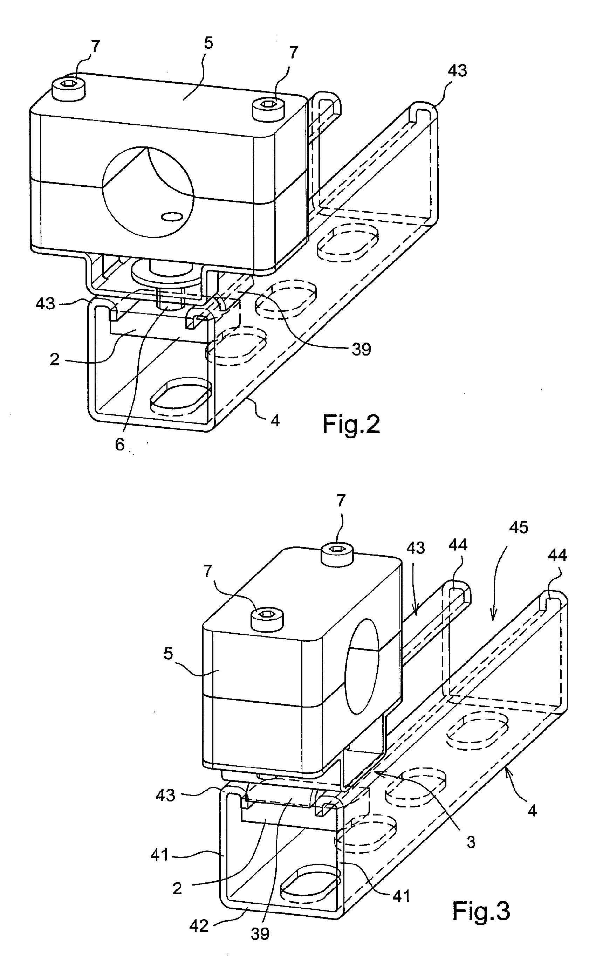

Fig. 1 shows a fixing assembly 1 which is designed to fix an object, in this case a pipe clamp 5, on a profiled element 4 with a longitudinal slot, as shown in Figs. 2 and 3. This is in particular a profiled element 4 of the type which has two sides 41 extending in the longitudinal direction, a bottom 42 which connects the sides 41, and a top surface, which top surface is formed by a flange directed inwards from each side 44, which flanges 44 bound a longitudinal slot 45 between them.

The fixing assembly 1 comprises an elongated metal nut 2 with a top surface 21 and a bottom surface 22 situated opposite said top surface. The nut 2 is of a length which is greater than the width of the longitudinal slot 45 of the profiled element 4, and is of such a width that the nut 2 can be inserted through the longitudinal slot 45 into the profiled element 4 with its longitudinal axis in line with the longitudinal slot 45, and can then be turned so that it extends substantially transversely to the longitudinal slot 45 and engages with its upper surface 21 behind the flanges 44 of the profiled element 4, as shown in Figs. 2 and 3. The nut 2 is provided with a bore 23 extending through it, which bore is preferably threaded, for receiving a male fixing element, in this case a bolt 6 for fixing the fixing element 3 on the profiled element 4 when the nut 2 is in its transverse position.

The fixing assembly 1 further comprises a fixing element 3, which is in the form of a clamp with a central part 31 which has a substantially U-shaped cross section. The U-shaped central part 31 comprises legs 33 and a plate-shaped body 32 with an engagement surface 38 which faces the nut so that it engages on the upper surface of the profiled element 4, as shown in Figs. 2 and 3. The legs 33 each extend on one side substantially perpendicularly to the plate-shaped body 32, and in the fitted state face away from the profiled element.

The plate-shaped body 32 has a central opening 37 which is substantially coaxial with the hole 23 in the nut 2 through which a male fixing element 6, in particular a threaded bolt with a head 61, is to be passed.

A flange 34, extending radially outwards relative to the axis of the central opening 37, is provided on the end of each of the legs 33.

The flanges 34 are provided with a fitting surface 35, against which the object to be fixed, in this example the pipe clamp 5, can be fitted. The flanges 34 extend parallel to the plate-shaped body 32 and are provided with holes 36 for receiving fixing means, in this example threaded bolts 7, for connecting the pipe clamp to the fixing element 3.

Owing to the U shape of the central part 31, in the fitted state the fitting surfaces 35 of the flanges 34 lie at a distance above the profiled element 4. To this end, the legs 33 are made of such a length that in the fitted state the head 61 of the male fixing element 6 does not project above the level of the fitting surfaces 35.

The fixing element 3 is provided with one or more, preferably two, locking lips 39, which extend from the edge of the engagement surface 38 in the direction of the nut 2. The locking lips 39 in the embodiment shown are of a rigid design, i.e. with little or no deformability.

The plate-shaped body with the locking lips 39 is formed and dimensioned in such a way that there are two possibilities for fitting the fixing element 3 on the profiled element 4.

The first possibility is shown in Fig. 2, where the locking lips 39 grip over the edge formed between the top surface and the side 41 of the profiled element 4. The locking lips in the example shown are formed with such a curvature that they fit closely against the fillets on the edge 43 between the flanges 44 and the sides 41, with the result that the locking lips 39 engage on the upper surface of the flanges 44 and also on the edge 43. This ensures that a fixing with little play in the direction of rotation is obtained during tightening of the bolt 6.

The second possibility is shown in Fig. 3, where the fixing element 3 is placed on the profiled element 4 in a position turned a quarter turn relative to the first fixing position of Fig. 2. In this position the locking lips 39 extend between the flanges 44 in the longitudinal slot 45 of the profiled element 4.

The locking lips 39 are preferably of a width that substantially corresponds to the width of the longitudinal slot 45 of the profiled element 4, so that the fixing element 3 is locked by a slight play in the direction of rotation when the bolt 6 is being tightened.

The pipe clamp 5 comprises a bottom clamp half 51 and a top clamp half 52. The bottom clamp half 51 in the fitted state rests against the fitting surfaces 35 of the flanges 34. The clamp halves 51 and 52 in the example shown each have a semicircular contact surface 53 which in the fitted state rests against the pipe or another round body. Through-running bores 54 are provided near the side edges in the clamp halves 51 and 52, through which bores the bolts 7 are inserted during fitting (see Figs. 2 and 3). The holes 36 in the flanges 34 of the fixing element 3 can be provided with screw thread, so that the clamp halves 51 and 52 and the fixing element 3 are clamped on top of each other by screwing the bolts 7 into said holes. Another possibility is for the holes 36 not to be provided with screw thread, but for a nut (not shown) to be screwed onto the bolts 7 in each case, which nut after fitting rests against the side of the flanges 34 facing away from the fitting surface 35.

The fitting of the fixing element 3 on the profiled element 4 is carried out as follows: The bolt 6 is inserted through the hole 37 and screwed into the hole 23 in the metal nut 2. This assembly is then fixed on the profiled element 4 by placing the nut 2 in the slot 45 and turning it through 90° to a transverse position and by tightening the bolt 6 in order to lock the fixing assembly relative to the profiled element.

As is known per se, the nut is, for example, of such length that said nut rests against the sides 41 on the inside of the profiled element 4. This means that in the transverse position the nut 2 is locked so that it cannot turn when the bolt 6 is being tightened. Particularly in the case of profiled elements 4 having flanges 44 with ends bent downwards as shown in Figs. 2 and 3, there is another possibility for locking the nut 2 during the tightening of the bolt 6, by providing grooves 24 on the top surface of the nut 2, which grooves engage on the bent-down edges of the flanges 44.

In one of the fitted positions described earlier and shown in Figs. 2 and 3 the fixing element 3 lies on the flanges 44 of the profiled element 4. The locking lips 39 ensure that the fixing element does not turn along with the bolt 6 when the latter is being tightened. The fixing element 3 is also locked to prevent rotation in the fitted state when further parts, such as, for example, the pipe clamp 5 and the pipe to be fitted in it (not shown), are being fitted. The flanges 44 of the profiled element 4 are wedged between the nut 2 and the plate-shaped body 32 after the bolt 6 has been fully tightened.

The clamp halves 51 and 52 of the pipe clamp 5 can then be fitted on the fixing element 3. Since the fixing element 3 can be fixed in two positions on the profiled element 4, one type of pipe clamp, in this case pipe clamp 5, can be fixed in two positions relative to the profiled element 4.

In the above, the fixing assembly 1 is shown for fitting a pipe clamp 5 on the profiled element 4. It must be understood that other objects can also be fitted on the fixing element 3.

## Claims

1. Fixing assembly for fixing an object, in particular a pipe clamp provided with two bores for receiving a bolt or the like, on a profiled element with a longitudinal slot, in particular a profiled element of the type which has two sides extending in the longitudinal direction, a bottom which connects the sides, and a top surface, which top surface is formed by a flange directed inwards from each side, which flanges bound a longitudinal slot between them, the fixing assembly comprising:
- an elongated metal nut with a top surface and a bottom surface situated opposite said top surface, which nut is of a length that is greater than the width of the longitudinal slot of the profiled element and of such a width that the nut can be inserted through the longitudinal slot into the profiled element with its longitudinal axis in line with the longitudinal slot, and can then be turned so that it extends substantially transversely to the longitudinal slot and with its top surface engages behind the flanges of the profiled element, the nut further having a bore extending through it which is preferably threaded, for receiving a male fixing element for fixing the object to the profiled element when the nut is in its transverse position, and
- a fixing element comprising a plate-shaped body with a central opening which is substantially coaxial with the bore in the nut, through which opening a male fixing element is to be inserted, and which plate-shaped body has on the side facing the elongated nut an engagement surface for engaging on the top surface of the profiled element, which fixing element is further provided with flanges which are connected to the plate, which flanges are provided with a fitting surface against which the object to be fixed can be fitted, and which flanges are provided with openings for receiving the fixing means, in particular bolts or the like, in order to connect the object to the fixing element.

2. Fixing assembly according to claim 1, in which the flanges of the fixing element are directed radially outwards relative to the axis of the central opening.

3. Fixing assembly according to claim 1 or 2, in which the flanges of the fixing element extend parallel to the plate-shaped body.

4. Fixing assembly according to one of claims 1-3, in which the flanges of the fixing element lie at such a distance from the plate-shaped body that in the fitted state the flanges are situated at a distance from the top surface of the profiled element.

5. Fixing assembly according to one of claims 1-4, in which the fixing element is in the form of a clamp having a central part with a substantially U-shaped cross section, the plate-shaped body connecting the legs of the U shape, and the flanges extending outwards from the legs of the U shape.

6. Fixing element according to one of the preceding claims, in which the fixing element has at least one locking lip extending from the edge of the engagement surface, which locking lip is designed to grip over the edge of the profiled element formed between the top surface and the side.

7. Fixing element according to claim 6, in which the locking lip extends from the edge of the engagement surface substantially in the direction of the nut, the plate-shaped body with the locking lip being shaped and dimensioned in such a way that the fixing element can be fitted in two positions on the profiled element, in a first fitted position of the plate-shaped body relative to the profiled element, the locking lip gripping over the edge of the profiled element formed between the top surface and the side, and in a second fitted position, crosswise to the first fitted position, the locking lip extending between the flanges in the longitudinal slot of the profiled element.

8. Fixing assembly according to claim 7, in which the locking lip is of a width that substantially corresponds to the width of the longitudinal slot of the profiled element.

9. Fixing assembly according to one of claims 6-8, in which the fixing element is provided with two locking lips.

10. Fixing assembly according to claim 9, in which the locking lips are provided diametrically opposite each other.

11. Fixing assembly according to one of claims 6-10, in which the locking lip is formed from the legs of the U by punching and bending.

12. Fixing assembly according to one of the preceding claims, in which the fixing element is made in one piece from sheet material.

13. Fixing assembly according to one of the preceding claims, further comprising a bolt, preferably threaded, to be inserted through the central opening in the plate-shaped body of the fixing element and accommodated in the bore in the nut.

14. Fixing element for use in a fixing assembly according to one of the preceding claims.

15. Fixing element, comprising a plate-shaped body with a central opening through which a male fixing element is to be inserted, which plate-shaped body has an engagement surface for engaging on the top surface of a profiled element, **characterized in that** the fixing element has at least one locking lip extending from the edge of the engagement surface substantially transversely to the engagement surface, the plate-shaped body with the locking lip being shaped and dimensioned in such a way that the fixing element can be fitted in two positions on a profiled element, in a first fitted position of the plate-shaped body relative to the profiled element, the locking lip gripping over the edge of the profiled element formed between the top surface and the side, and in a second fitted position, crosswise to the first fitted position, the locking lip extending between the flanges in the longitudinal slot of the profiled element.

16. Fixing element according to claim 14, in which the fixing element is formed with a central part with a substantially U-shaped cross section, the plate-shaped body connecting the legs of the U shape and the fixing element being provided with flanges which extend outwards from the legs of the U shape, which flanges are provided with a fitting surface against which the object to be fixed can be fitted, and which flanges are provided with openings for receiving fixing means for connecting the object to the fixing element.

17. Combination of a fixing element according to claim 14 and a pipe clamp, in which the pipe clamp has two clamp halves which can be connected to each other, each with a contact surface, which can be placed around a tubular element, and in which at least one clamp half can be fitted on the flanges of the fixing element by means of fixing means, preferably bolts.
